# EUROPÄISCHE PATENTSCHRIFT

(11) **EP 2 733 394 B1**
(45) Veröffentlichungstag und Bekanntmachung des Hinweises auf die Patenterteilung: **22.07.2020**
(21) Anmeldenummer: 13191523.3
(22) Anmeldetag: 05.11.2013
(51) Int. Cl.: F16H 63/48, F16H 63/30

(54) **SCHALTUNGSANORDNUNG MIT PARKSPERRE UND VERFAHREN ZU DEREN BETÄTIGUNG**
CIRCUIT ASSEMBLY WITH PARKING LOCK AND METHOD FOR ACTUATING THE SAME
AGENCEMENT DE CIRCUIT AVEC FREIN DE STATIONNEMENT ET SON PROCÉDÉ D'ACTIONNE PAS MENT

(30) Priorität: 16.11.2012 DE 102012022635
(43) Veröffentlichungstag der Anmeldung: 21.05.2014
(73) Patentinhaber: Magna PT B.V. & Co. KG, 74199 Untergruppenbach (DE)
(72) Erfinder: Kapp, Stefan, 74399 Walheim (DE); Burgardt, Georg, 74626 Bretzfeld (DE)
(74) Vertreter: Rausch, Gabriele

(56) Entgegenhaltungen:
- EP-A1- 1 865 237
- EP-A1- 2 469 130
- WO-A1-2005/073602
- DE-A1- 19 713 423
- DE-A1-102009 030 010
- DE-T2- 69 516 766
- US-A- 1 898 190

## Beschreibung

Die vorliegende Erfindung betrifft eine Schaltungsanordnung für ein Kraftfahrzeuggetriebe, mit einer Schaltkupplungsanordnung, mittels der eine Gangstufe des Kraftfahrzeuggetriebes ein- und auslegbar ist, mit einer Aktuatoranordnung, die über eine erste Kraftübertragungseinrichtung mit der Schaltkupplungsanordnung gekoppelt ist, und mit einer Parksperrenanordnung, die über eine zweite Kraftübertragungseinrichtung mit der Aktuatoranordnung gekoppelt ist, wobei die Aktuatoranordnung in eine Parksperrenposition versetzbar ist, in der die Parksperrenanordnung betätigt ist, wobei die Aktuatoranordnung dazu ausgebildet ist, auf dem Weg in die Parksperrenposition und/oder in der Parksperrenposition über die erste Kraftübertragungseinrichtung die Gangstufe einzulegen.

Ferner betrifft die vorliegende Erfindung ein Verfahren zum Betätigen einer Parksperrenanordnung mittels einer Aktuatoranordnung, insbesondere mittels einer Schaltungsanordnung der oben bezeichneten Art.

Auf dem Gebiet der Kraftfahrzeuggetriebe ist es bekannt, Parksperrenanordnungen zum Festsetzen eines Kraftfahrzeuges zu verwenden. Derartige Parksperrenanordnungen werden insbesondere in automatisierten Getrieben verwendet, bei denen es nicht immer möglich ist, eine Gangstufe zum Immobilisieren des Kraftfahrzeuges einzulegen (wie bspw. bei automatisierten Schaltgetrieben oder Doppelkupplungsgetrieben), oder bei denen das Getriebe über einen hydrodynamischen Wandler mit einem Antriebsmotor gekoppelt ist. In derartigen automatisierten Getrieben wird eine Parksperrenanordnung generell aktiviert, indem ein Gangschalthebel in eine Position P bewegt wird. Bislang war es üblich, den Schalthebel mechanisch mit einer Parksperrenanordnung zu koppeln. Es sind jedoch sog. "Park-by-Wire"-Systeme bekannt, bei denen die Parksperrenanordnung mittels einer Aktuatoranordnung betätigt wird.

Parksperrenanordnungen dieser Art weisen typischerweise ein Parksperrenrad auf, das fest mit einer Welle verbunden ist, die dem Abtrieb des Kraftfahrzeuggetriebes zugeordnet ist. Ferner beinhalten derartige Parksperrenanordnungen typischerweise eine Parksperrenklinke, die in einer Freigabeposition das Parksperrenrad freigibt und in einer Parksperrenposition in eine Verzahnung des Parksperrenrades eingreift, um auf diese Weise das Kraftfahrzeug zu immobilisieren. Ein Beispiel einer derartigen Parksperrenanordnung ist offenbart in dem Dokument DE 20 2008 001 760 U1.

Alternative Parksperrenanordnungen weisen Ziehkeilanordnungen auf, um eine Parksperrenklinke von einer Freigabeposition in eine Parksperrenposition zu versetzen.

Auf dem Gebiet der Schaltungsanordnungen für Kraftfahrzeuge ist es ferner bekannt, eine Schaltkupplungsanordnung, wie bspw. eine Synchron-Schaltkupplung mittels einer Aktuatoranordnung zu betätigen. Derartige Aktuatoranordnungen können Hydraulikaktuatoren beinhalten oder elektromechanische Aktuatoren. Für den zweiten Fall ist es bspw. bekannt, sog. Schaltwalzen zu verwenden, die mittels eines Elektromotors angetrieben werden. Schaltwalzen dieser Art beinhalten eine Schaltwalzenkontur, in die ein Mitnehmer eingreift, der mit der Schaltkupplungsanordnung gekoppelt ist, um bspw. eine Schaltmuffe einer Schaltkupplung zwischen einer Neutralposition und einer Gangposition zu versetzen.

Aus der früheren deutschen Anmeldung DE 10 2012 007 061, die einen Stand der Technik gemäß § 3 (2) PatG bildet, ist eine Schaltungsanordnung bekannt, bei der eine Schaltwalze sowohl dazu verwendet wird, um in an sich bekannter Weise eine Schaltkupplungsanordnung zu betätigen, ferner aber auch über ein Zwanglaufgetriebe mit einer Parksperrenanordnung der oben beschriebenen Art gekoppelt ist.

Aus der EP 1 865 237 A1 ist ein Zweiganggetriebe für ein geländegängiges Fahrzeug bekannt, wobei die Gangstufen mittels einer Schaltwalze manuell betätigt werden. Die Schaltwalze beinhaltet eine Nockenkontur zum Einlegen einer Parksperre. Eine Parksperrenklinke zum Eingriff in ein Parksperrenrad des Getriebes ist über einen Energiespeichermit der Parksperrenkontur der Schaltwalze gekoppelt, so dass bei einer Drehposition des Parksperrenrades, bei der ein Zahn des Parksperrenrades einem Klinkenzahn der Parksperrenklinke gegenüberliegt, ein Weiterdrehen der Schaltwalze möglich ist, ohne die Parksperrenklinke zu beschädigen.

Weiterhin geht aus der EP 2 469 130 A1 ein automatisches oder halbautomatisches Getriebe hervor, bei dem die Position eines Führungselements die Wirkungsweise einer Betätigungseinrichtung steuert. Durch Bewegen der Führung relativ zu den geführten Elementen werden diese in aufeinanderfolgenden Paaren von Positionen (P1-P8) synchron angeordnet, wobei die Paare von Positionen bestimmten Kombinationen von Betriebsarten entsprechen. Auf diese Weise wird eine synchronisierte Reihe von Bewegungen von mindestens zwei Betätigungseinrichtungen erzielt, die die Bewegung von z.B. einem Gangwählhebel und einer Kupplung synchronisieren kann, so dass ein Wechsel von einem ersten Zahnrad über einen neutralen Gang zu einem zweiten Gang möglich ist.

Vor dem obigen Hintergrund ist es eine Aufgabe der Erfindung, eine verbesserte Schaltungsanordnung sowie ein verbessertes Verfahren zum Betätigen einer Parksperrenanordnung anzugeben, wobei die Aktuatoranordnung einfach aufgebaut werden kann und wobei das Betätigen der Parksperrenanordnung mit einer hohen Sicherheit möglich ist.

Gemäß der vorliegenden Erfindung, wird diese Aufgabe durch eine Schaltungsanordnung mit den Merkmalen nach Anspruch 1 gelöst.

Ferner wird die obige Aufgabe gelöst durch ein Verfahren zum Betätigen einer Parksperrenanordnung mittels einer elektrisch betätigbaren Aktuatoranordnung mit den Merkmalen nach Anspruch 11.

Die erfindungsgemäße Schaltungsanordnung ermöglicht, dass sowohl die Schaltkupplungsanordnung als auch die Parksperrenanordnung mittels eines einzelnen Aktuators betätigbar sind. Hierdurch kann der Aufwand für die Aktuatorik reduziert werden, da es bspw. nicht notwendig ist, für die Parksperrenanordnung einen separaten Aktuator vorzusehen.

Wenn bei der Aktuatoranordnung vorgesehen ist, dass die Parksperrenposition über eine Gangposition anzufahren ist bzw. in der Parksperrenposition gleichzeitig eine Gangstufe einzulegen ist, kann ein Befehl zum Einlegen der Parksperre im Stand der Technik ggf. nicht vollzogen werden, da es vorkommen kann, dass das Einlegen der Gangstufe nicht möglich ist, bspw. dadurch, dass die Schaltkupplungsanordnung blockiert. Dies kann im Stillstand eines Kraftfahrzeuges erfolgen, da es sein kann, dass die zum Einlegen der Gangstufe axial ineinander schiebbaren Verzahnungen (bspw. von einem Kupplungskörper und von einer Schaltmuffe) in einer solchen Drehposition relativ zueinander sind, dass dieser Einlegevorgang nicht möglich ist und die Schaltkupplung folglich blockiert. Durch die erfindungsgemäße bereitgestellte Entkopplungseinrichtung in der ersten Kraftübertragungseinrichtung ist es möglich, das Einlegen der Parksperrenanordnung und das Einlegen der Gangstufe mechanisch voneinander zu entkoppeln, derart, dass trotz blockierter Schaltkupplungsanordnung das Einlegen der Parksperrenanordnung gewährleistet werden kann.

Die Entkopplungseinrichtung ist dabei so ausgebildet, dass sie durch eine bestimmte Kraft aktivierbar ist, die die normalerweise zum Einlegen einer Gangstufe bzw. zum Einlegen der Parksperre erforderliche Kraft überschreitet.

Demzufolge ist bei dem erfindungsgemäßen Verfahren vorgesehen, dass beim Erfassen einer solchen Blockade die Aktuatoranordnung eine größere Kraft (zweite Kraft) bereitstellt, mittels der die Entkopplungseinrichtung aktiviert werden kann, um auf diese Weise das Einlegen bzw. Betätigen der Parksperrenanordnung auch dann zu ermöglichen, wenn die Blockade aufgetreten ist, bspw. in der Schaltkupplungsanordnung.

Folglich lässt sich eine Schaltungsanordnung bereitstellen, die eine geringe Komplexität sowie ein hohes Maß an Robustheit ermöglicht. Ferner kann die Schaltungsanordnung bei niedrigen Aufwendungen bzw. zu geringen Kosten hergestellt werden.

Ferner wird eine hohe, im Idealfall 100%-ige Verfügbarkeit der Parksperrenanordnung sichergestellt wird. Zudem ergibt sich aufgrund der vollintegrierten Lösung ein geringer Platzbedarf. Die Kopplung der P-Position eines Schalthebels im Innenraum des Fahrzeuges an die Schaltungsanordnung kann dabei die höchsten bestehenden Sicherheitsanforderungen erfüllen (bspw. ASIL A).

Die Aufgabe wird somit vollkommen gelöst.

Gemäß einer besonders bevorzugten Ausführungsform weist die Entkopplungseinrichtung einen mechanischen Energiespeicher auf, der dazu ausgebildet ist, eine von der Aktuatoranordnung aufgebrachte Kraft zum Einlegen der Gangstufe zu speichern, wenn die Schaltkupplungsanordnung blockiert ist.

Die Differenz zwischen der ersten und der zweiten Kraft bei Durchführung des erfindungsgemäßen Verfahrens kann dabei der mechanisch gespeicherten Energie entsprechen.

Gemäß einer besonders bevorzugten Ausführungsform weist die Entkopplungseinrichtung eine Feder auf.

Über eine Feder kann ein "Leerweg" in der ersten Kraftübertragungseinrichtung realisiert werden, derart, dass die Aktuatoranordnung auch bei einer Blockade weiter in die Parksperrenposition bewegbar ist, wobei in diesem Fall die Feder gespannt wird.

Die Feder kann dabei mit einer geringen Vorspannung eingebaut werden, um Klappergeräusche zu vermeiden.

Bei Bereitstellung eines mechanischen Energiespeichers wie einer Feder ist es bevorzugt, wenn der Energiespeicher eine Vorspannkraft zwischen der Aktuatoranordnung und der Schaltkupplungsanordnung einrichtet, die größer ist als eine zum Einlegen der Gangstufe aufzubringende mittlere Schaltkraft.

Bei dieser Ausführungsform wird bei normalen Schaltvorgängen, bei denen die Schaltkupplungseinrichtung nicht blockiert ist, die Feder nicht komprimiert bzw. der mechanische Energiespeicher wird nicht "geladen".

Hierdurch können normale Gangwechsel erfolgen wie in herkömmlichen Kraftfahrzeuggetrieben. Lediglich dann, wenn in der Schaltungseinrichtung eine Blockade auftritt und die Parksperrenposition einzulegen ist, ist diese Vorspannkraft zu überwinden.

Alternativ ist es auch möglich, die Vorspannkraft geringer als die Schaltkraft anzusetzen, wobei dann bei jedem Schaltvorgang eine gewisse Komprimierung der Feder erfolgt. Hierdurch kann ggf. ein Kratzen in der Schaltkupplungsanordnung verhindert werden.

Gemäß einer insgesamt bevorzugten Ausführungsform ist die Entkopplungseinrichtung zwischen einem Aktuatorglied der Aktuatoranordnung und einem Schaltglied der Schaltkupplungsanordnung angeordnet.

Alternativ ist es jedoch auch denkbar, die Entkopplungseinrichtung in das Aktuatorglied zu integrieren.

Ferner ist es hierbei vorteilhaft, wenn die Entkopplungseinrichtung zwischen einer formschlüssig mit dem Aktuatorglied verbundenen Schaltstange und dem Schaltglied angeordnet ist.

Während bei herkömmlichen Schaltkupplungsanordnungen Schaltglieder wie Schaltgabeln starr an einer Schaltgabel befestigt sind, wird durch die Entkopplungseinrichtung zwischen Aktuatorglied und Schaltglied erreicht, dass das Schaltglied in einer Blockadeposition verbleiben kann, auch wenn die Aktuatoranordnung in die Parksperrenposition bewegt wird.

Ferner ist es insgesamt vorteilhaft, wenn die Schaltkupplungsanordnung ein Schaltglied und eine Schaltstange aufweist, wobei das Schaltglied an der Schaltstange begrenzt verschieblich gelagert ist.

Dabei ist es vorteilhaft, wenn das Schaltglied über eine Feder mit der Schaltstange gekoppelt ist, wobei die Feder einen mechanischen Energiespeicher einer Entkopplungseinrichtung darstellt.

Generell ist es jedoch auch möglich, einen Mitnehmer, mittels dessen die Schaltstange zu betätigen ist, verschieblich an der Schaltstange zu lagern und ggf. über eine Feder mit der Schaltstange zu koppeln. In diesem Fall kann das Schaltglied starr mit der Schaltstange verbunden sein.

Die elektrisch betätigbare Aktuatoranordnung kann hydraulischer oder elektromechanischer Art sein.

Von besonderem Vorzug ist es, wenn die Aktuatoranordnung eine Schaltwalze aufweist.

In diesem Fall ist es von besonderem Vorzug, wenn ein Mitnehmerelement der ersten Kraftübertragungseinrichtung in eine Schaltkontur der Schaltwalze eingreift und/oder wenn die Parksperrenanordnung über ein Zwanglaufgetriebe mit der Schaltwalze gekoppelt ist.

Das Mitnehmerelement kann bspw. einen Gleitstein aufweisen, der in eine Schaltnut der Schaltwalze greift.

Das Zwanglaufgetriebe, das die zweite Kraftübertragungseinrichtung in diesem Fall bildet, kann bspw. ein Stirnradsatz sein, wobei ein Antriebsrad zum Betätigen der Parksperrenanordnung mit einem Rad gekoppelt ist, das starr mit der Schaltwalze verbunden ist.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung, welche durch die Ansprüche definiert wird, zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung eines Antriebsstranges für ein Kraftfahrzeug mit einem Kraftfahrzeuggetriebe, das eine erfindungsgemäße Schaltkupplungsanordnung aufweist;
- Fig. 1a: eine Darstellung von Strom und Kraft über einem Weg eines Aktuatorgliedes einer Aktuatoranordnung einer erfindungsgemäßen Schaltungsanordnung;
- Fig. 2: eine schematische Darstellung einer Ausführungsform einer erfindungsgemäßen Schaltungsanordnung in einer Neutralposition;
- Fig. 3: die Schaltungsanordnung der Fig. 2 in einer Parksperrenposition bei blockierter Schaltkupplung;
- Fig. 4: eine Ausführungsform einer ersten Kraftübertragungseinrichtung für eine erfindungsgemäße Schaltungsanordnung;
- Fig. 5: eine weitere Ausführungsform einer ersten Kraftübertragungseinrichtung;
- Fig. 6: eine weitere Ausführungsform einer ersten Kraftübertragungseinrichtung;
- Fig. 7: eine weitere Ausführungsform einer ersten Kraftübertragungseinrichtung;
- Fig. 8: eine weitere Ausführungsform einer ersten Kraftübertragungseinrichtung; und
- Fig. 9: eine weitere Ausführungsform einer ersten Kraftübertragungseinrichtung.

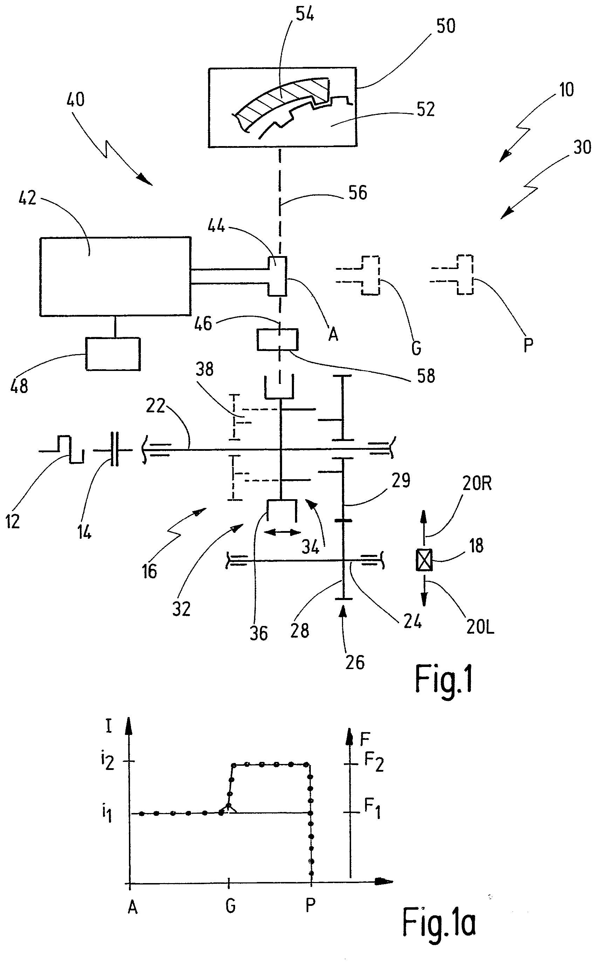

In Fig. 1 ist ein Antriebsstrang für ein Kraftfahrzeug schematisch dargestellt und generell mit 10 bezeichnet. Der Antriebsstrang 10 beinhaltet einen Antriebsmotor 12 wie einen Verbrennungsmotor, dessen Ausgangswelle mit dem Eingang einer Kupplungsanordnung 14 gekoppelt ist. Die Kupplungsanordnung 14 kann eine einfache Kupplung aufweisen, kann jedoch auch eine Doppelkupplungsanordnung aufweisen. Ein Ausgang der Kupplungsanordnung 14 ist mit dem Eingang eines Getriebes 16 verbunden, das vorzugsweise als Vorgelegegetriebe ausgebildet ist und eine Mehrzahl von Vorwärtsgangstufen und wenigstens eine Rückwärtsgangstufe aufweist. Das Getriebe 16 kann dabei ein einfaches Getriebe sein, oder ein Doppelkupplungsgetriebe mit zwei Teilgetrieben. Anstelle der Kupplungsanordnung und des Getriebes kann der Antriebsstrang 10 auch ein Wandlerautomatikgetriebe aufweisen.

Ein Ausgang des Getriebes 16 ist mit einem Differential 18 verbunden, das Antriebsleistung auf zwei angetriebene Räder 20L, 20R des Antriebsstranges verteilt.

Das Getriebe 16 weist vorliegend eine erste Welle 22 und eine zweite Welle 24 auf. In Fig. 1 ist schematisch ein Radsatz 26 dargestellt, der ein Festrad 28 aufweist, das fest mit der zweiten Welle 24 verbunden ist, sowie ein hiermit kämmendes Losrad 29, das drehbar an der ersten Welle 22 gelagert ist. Es versteht sich, dass der Radsatz 26 bspw. einer Gangstufe des Getriebes zugeordnet sein kann, und dass das Getriebe 16 eine Mehrzahl derartiger Radsätze beinhalten kann.

Vorliegend kann die dem Radsatz 26 zugeordnete Gangstufe eine solche Gangstufe sein, die bspw. in einem automatisierten Getriebe zwischen einer D-Position und einer P-Position eines Gangschalthebels angeordnet ist, also bspw. eine Rückwärtsgangstufe.

Das Getriebe 16 weist ferner eine Schaltungsanordnung 30 auf. Die Schaltungsanordnung 30 beinhaltet ein Schaltkupplungspaket 32, das eine erste Schaltkupplung 34 aufweist. Die erste Schaltkupplung 34 dient dazu, das Losrad 29 von der ersten Welle 22 zu entkoppeln oder drehfest hiermit zu verbinden. Die erste Schaltkupplung 34 kann bspw. eine Synchron-Schaltkupplung herkömmlicher Bauweise sein.

Das Schaltkupplungspaket 32 weist eine Schaltmuffe 36 auf, mittels der die erste Schaltkupplung 34 betätigbar ist, wie es in Fig. 1 durch einen Pfeil angedeutet ist.

Das Schaltkupplungspaket 32 kann ggf. eine zweite Schaltkupplung aufweisen, wie es schematisch bei 38 angedeutet ist.

Die Schaltungsanordnung 30 weist ferner eine elektrisch betätigbare Aktuatoranordnung 40 auf. Die Aktuatoranordnung 40 beinhaltet einen Aktuator 42, bei dem es sich bspw. um einen hydraulischen oder einen elektromechanischen Aktuator handeln kann. Der Aktuator 42 weist ein Aktuatorglied 44 auf, das mittels des Aktuators 42 zwischen mehreren Positionen versetzbar ist, bspw. einer in Fig. 1 angedeuteten Ausgangsposition A (bei der es sich um eine Neutralposition oder um eine Gangposition handeln kann), eine Gangposition G, die jener Gangstufe zugeordnet ist, die durch den Radsatz 26 abgebildet wird, sowie eine Parksperrenposition P.

Das Aktuatorglied 44 ist über eine erste Kraftübertragungseinrichtung 46 mit der Schaltkupplung gekoppelt, insbesondere mit der Schaltmuffe 36.

Der Aktuatoranordnung 40 ist eine Steuereinrichtung 48 zugeordnet, die die Aktuatoranordnung 40 ansteuert, derart, dass das Aktuatorglied 44 zwischen den verschiedenen Positionen versetzbar ist. In einer bevorzugten Ausführungsform beinhaltet die Aktuatoranordnung 40 einen Elektromotor, und das Aktuatorglied 44 ist durch eine Schaltwalze gebildet, die mittels des Elektromotors angetrieben wird.

Die Schaltungsanordnung 30 beinhaltet ferner eine Parksperrenanordnung 50. Die Parksperrenanordnung 50 kann in an sich bekannter Weise ein Parksperrenrad 52 aufweisen, das bspw. mit einer Ausgangswelle des Getriebes 16 starr verbunden ist, sowie eine Parksperrenklinke 54, die um eine Achse verschwenkbar ist, um das Parksperrenrad entweder freizugeben oder gegenüber einem nicht dargestellten Gehäuse des Getriebes festzulegen. In der Parksperrenposition der Parksperrenanordnung 50 ist das Kraftfahrzeug, das mit dem vorliegenden Antriebsstrang ausgerüstet ist, folglich immobilisiert.

Die Parksperrenanordnung 50 kann bspw. aufgebaut sein wie eine Parksperrenanordnung, die in dem eingangs genannten Dokument DE 20 2008 001 760 U1 beschrieben ist, auf dessen Offenbarungsgehalt vorliegend vollumfänglich Bezug genommen wird.

Die Parksperrenanordnung 50 ist über eine zweite Kraftübertragungseinrichtung 56 mit der Aktuatoranordnung 40 gekoppelt, genauer gesagt mit dem Aktuatorglied 44. Folglich ist zur Betätigung der Parksperrenanordnung 50 und zur Betätigung der Schaltkupplung 34 nur ein einziger Aktuator erforderlich.

Die Parksperrenanordnung 50 wird in der Regel bei Stillstand des Kraftfahrzeuges betätigt. Bei Stillstand des Kraftfahrzeuges kann es vorkommen, dass das Einlegen einer Gangstufe nicht möglich ist, da bspw. Verzahnungen einer Schaltmuffe und eines Kupplungskörpers des Losrades nicht axial ineinandergefahren werden können. Vorliegend ist generell ferner vorgesehen, dass die Parksperrenposition des Aktuatorgliedes 44 generell angefahren wird, indem die Gangstufenposition G "überfahren" wird, so dass die zugeordnete Gangstufe zwischenzeitlich entweder eingelegt und wieder ausgelegt wird, oder aber in der Parksperrenposition P eingelegt bleibt.

Um die Parksperrenposition auch dann mittels des Aktuatorgliedes 44 anfahren zu können, wenn die erste Schaltkupplung 34 blockiert ist, weist die erste Kraftübertragungseinrichtung 46 eine Entkopplungseinrichtung 58 auf. Die Entkopplungseinrichtung ist dazu ausgebildet, dass sich die Aktuatoranordnung in die Parksperrenposition P versetzen lässt, auch wenn die Schaltkupplung 34 blockiert ist.

Die Entkopplungseinrichtung 58 kann dabei eine elektromagnetisch oder auf andere Art und Weise betätigbare Kupplung aufweisen. Von besonderem Vorzug ist es jedoch, wenn die Entkopplungseinrichtung 58 einen mechanischen Energiespeicher aufweist, der dazu ausgebildet ist, eine von der Aktuatoranordnung 40 aufgebrachte Kraft zum Einlegen der Gangstufe zu speichern, wenn die erste Schaltkupplung 34 blockiert ist.

Fig. 1a zeigt ein Diagramm eines elektrischen Stromes I und einer zugeordneten Kraft F über dem Weg des Aktuatorgliedes 44.

Um das Aktuatorglied 44 von der Ausgangsposition A in die Parksperrenposition P zu bewegen, ist in der Regel ein elektrischer Strom i₁ erforderlich, der zu einer bestimmten Kraft F₁ führt, die von der Aktuatoranordnung ausgeübt wird. Wenn während des Weges von der Ausgangsposition A in die Parksperrenposition P die erste Schaltkupplung 34 nicht blockiert, ist dieser Strom hinreichend, um die Parksperrenposition P zu erreichen. Dies ist in Fig. 1a durch eine durchgezogene Linie gezeigt.

Sofern die erste Schaltkupplung blockiert, würde die Aktuatoranordnung 40 stehenbleiben, so dass die Parksperrenposition P nicht erreicht werden kann. Falls eine derartige Blockade detektiert wird, kann der elektrische Strom erhöht werden, und zwar bspw. auf einen Wert i₂, der einer Kraft F₂ entspricht. Die Kraft F₂ ist größer als die Kraft F₁. Die Differenz zwischen der Kraft F₂ und der Kraft F₁ ist hinreichend, um die Entkopplungseinrichtung zu aktivieren, also bspw. eine mechanische Feder auszulenken, die der Entkopplungseinrichtung 58 zugeordnet ist.

Bei Detektion der Blockade wird folglich der elektrische Strom erhöht und folglich eine höhere Kraft aufgebracht, um auf diese Weise die Entkopplungseinrichtung 58 zu aktivieren und folglich die Parksperrenposition P sicher einlegen zu können, auch wenn die erste Schaltkupplung 34 blockiert ist.

Der elektrische Strom kann bspw. ein elektrischer Motorstrom zum Antreiben einer Schaltwalze sein, kann jedoch auch ein Strom einer Pumpe zum Betätigen eines hydraulischen Aktuators sein oder dergleichen.

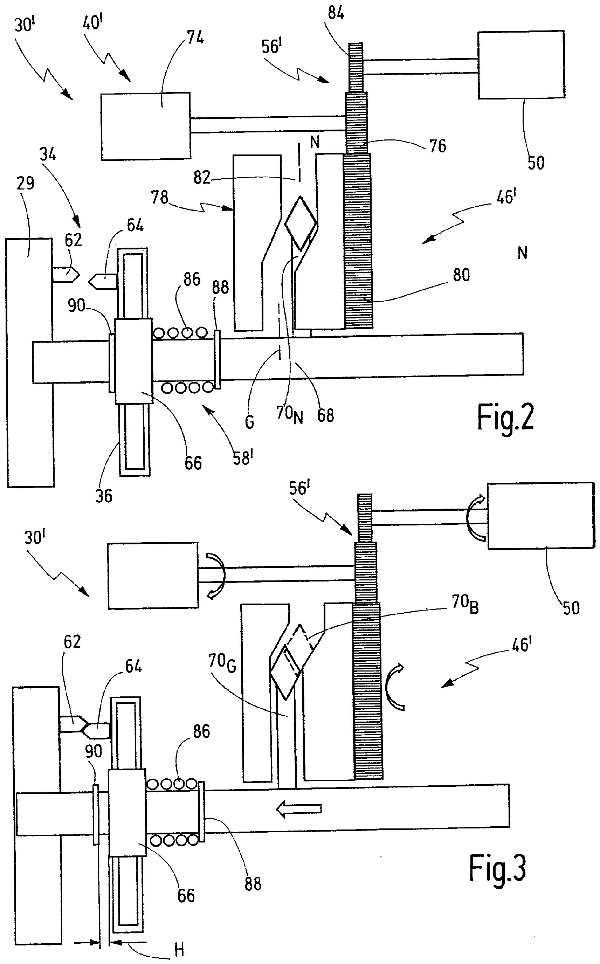

In den Figuren 2 und 3 ist eine weitere Ausführungsform einer Schaltungsanordnung 30' gezeigt, die generell hinsichtlich Aufbau und Funktionsweise der Schaltungsanordnung 30 der Fig. 1 entspricht. Gleiche Elemente sind daher durch gleichen Bezugszeichen gekennzeichnet. Im Folgenden werden im Wesentlichen die Unterschiede erläutert.

In Fig. 2 ist gezeigt, dass dem Losrad 29 eine Kupplungskörperverzahnung 62 eines starr mit dem Losrad 29 verbundenen Kupplungskörpers zugeordnet sein kann. Ferner weist die Schaltmuffe 36 eine Schaltmuffenverzahnung 64 auf. Die Schaltmuffe 36 wird vorliegend mittels eines Schaltgliedes wie einer Schaltgabel 66 betätigt. In Fig. 1 ist die erste Schaltkupplung 34 in einer Neutralposition gezeigt, bei der das Losrad 29 von der zugeordneten Welle 24 entkoppelt ist. Durch Verschieben der Schaltmuffe 36 in Fig. 2 nach links können die Verzahnungen 62, 64 axial ineinandergreifen, um auf diese Weise eine formschlüssige Verbindung zwischen dem Losrad 29 und der zugeordneten Welle 24 herzustellen.

Das Schaltglied 66 ist an einer Schaltstange 68 begrenzt axial verschieblich gelagert. An der Schaltstange 68 ist ein Schaltstangenmitnehmer 70 festgelegt, an dem bspw. ein Gleitstein (rautenförmig in Fig. 2 dargestellt) festgelegt sein kann.

Die Aktuatoranordnung 40' der Schaltungsanordnung 30' der Figuren 2 und 3 weist einen Elektromotor 74 auf, dessen Motorwelle mit einem Motorzahnrad 76 starr verbunden ist. Ferner beinhaltet die Aktuatoranordnung 40' eine Schaltwalze 78, die ein Aktuatorglied darstellt. Die Schaltwalze 78 ist starr mit einem Schaltwalzenzahnrad 80 verbunden, das mit dem Motorzahnrad 76 in Eingriff steht. Die Schaltwalze 78 weist eine Schaltwalzenkontur 82 auf, in die der Schaltstangenmitnehmer 70 eingreift. Durch Verdrehen der Schaltwalze 78 mittels des Elektromotors 74 kann der Schaltstangenmitnehmer 70 folglich über die Schaltwalzenkontur 82 axial versetzt werden, und zwar von der in Fig. 2 gezeigten Neutralposition in eine Gangposition G, um also die erste Schaltkupplung 34 zu betätigen. Durch Drehen der Schaltwalze 78 in die entgegengesetzte Richtung kann der Schaltstangenmitnehmer 70 wieder in die entgegengesetzte Richtung (d.h. in die Neutralposition) zurückgezogen werden.

Die Parksperrenanordnung 50 weist eine Eingangswelle auf, die mit einem Parksperrenzahnrad 84 starr verbunden ist. Das Parksperrenzahnrad 84 steht in Eingriff mit dem Motorzahnrad 76 (oder mit dem Schaltwalzenzahnrad 80).

Durch Verdrehen des Motorzahnrades 76 lässt sich folglich über das Parksperrenzahnrad 84 die Parksperrenanordnung 50 betätigen. Die Kopplung zwischen dem Motorzahnrad 76 und dem Parksperrenzahnrad 84 bildet eine zweite Kraftübertragungseinrichtung 56'. Die zweite Kraftübertragungseinrichtung 56' ist vorliegend vorzugsweise also durch ein Zwanglaufgetriebe gebildet.

Zwischen der Schaltstange 68 und dem Schaltglied 66 ist eine Entkopplungseinrichtung 58' angeordnet. Die Entkopplungseinrichtung 58' weist eine Feder 86 auf, die als Druckfeder koaxial um die Schaltstange 68 herum angeordnet ist. An einem Ende stützt sich die Feder 86 dabei an einer Schaltstangenschulter 88 ab. Mit ihrem anderen Ende stützt sich die Feder 86 an dem Schaltglied 66 ab. Zum Einrichten einer Grundposition ist an der Schaltstange 68 ferner ein Anschlag 90 vorgesehen, gegen den das Schaltglied 66 mittels der Feder 86 gedrückt wird.

Die Vorspannkraft der Feder 86 kann dabei größer sein als eine mittlere Schaltkraft, derart, dass die Feder 86 bei normalen Schaltvorgängen nicht ausgelenkt wird. Die Vorspannkraft der Feder 86 kann jedoch auch kleiner sein als die mittlere Schaltkraft. In diesem Fall wird die Feder 86 auch bei normalen Schaltvorgängen regelmäßig ausgelenkt, wobei hierdurch ein Kratzen der ersten Schaltkupplung 34 ggf. verhindert werden kann.

Die Feder 86 der Entkopplungseinrichtung 58' dient jedoch in erster Linie dazu, das Einlegen der Parksperrenposition P auch dann zu ermöglichen, wenn die erste Schaltkupplung 34 blockiert. Dies wird im Folgenden anhand von Fig. 3 erläutert. Wenn der Elektromotor 74 angetrieben wird, um die Parksperrenposition einzulegen (durch entsprechende Pfeile dargestellt), wird der Schaltstangenmitnehmer 70 mittels der Schaltwalzenkontur 82 in axialer Richtung versetzt. Wenn die Verzahnungen 62, 64 so aufeinanderstehen, dass die erste Schaltkupplung 34 blockiert, dann würde bei einer herkömmlichen Schaltungsanordnung die Schaltwalze 78 in einer Position stehenbleiben, bei der der Schaltstangenmitnehmer 70 eine Position 70_{B} erreicht hat, die in Fig. 3 gestrichelt dargestellt ist. Durch die Maßnahme, die Entkopplungseinrichtung 58' vorzusehen, kann die Schaltwalze 78 jedoch zum Einrichten der Parksperrenposition P weiterdrehen, bis in die in Fig. 3 bei 70_{G} gezeigte Position. Hierbei wird die Feder 86 ausgelenkt, und zwar um einen Hub H. Der Hub H kann bspw. im Bereich von 1 bis 10 mm liegen, vorzugsweise im Bereich von 2 bis 6 mm, insbesondere im Bereich von 3 bis 5 mm.

In der so eingerichteten Parksperrenposition P kann dann, wenn sich die Blockade der ersten Schaltkupplung 34 löst, die Kraft der Feder 86 hinreichend sein, um die zugeordnete Gangstufe einzulegen, also den Hub H wieder auf 0 oder nahezu 0 zu bringen, ohne dass die Schaltwalze 78 hierzu bewegt werden muss.

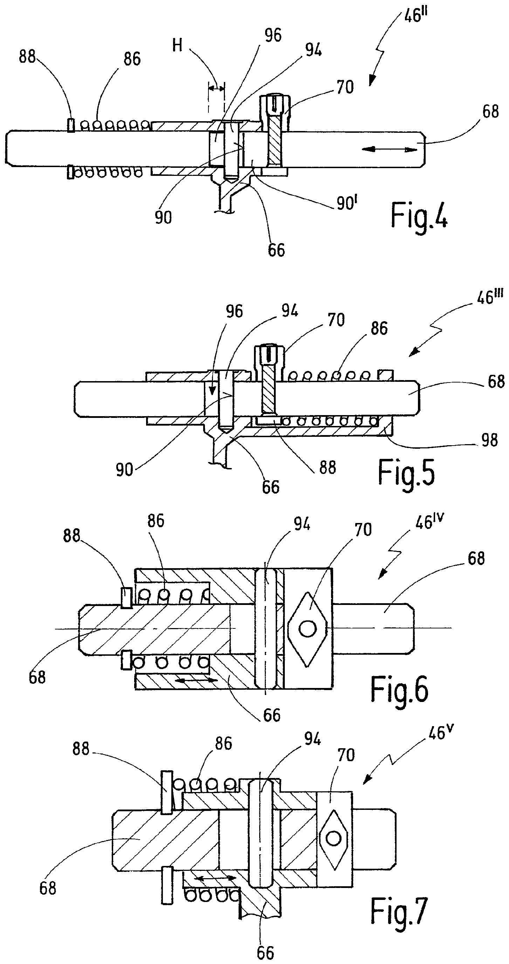

In den Figuren 4 bis 9 sind weitere Ausführungsformen von ersten Kraftübertragungseinrichtungen dargestellt, die jeweils Entkopplungseinrichtungen aufweisen und hinsichtlich Aufbau und Funktionsweise generell der ersten Kraftübertragungseinrichtung 46' der Figuren 2 und 3 entsprechen. Gleiche Elemente sind daher durch gleiche Bezugszeichen gekennzeichnet. Im Folgenden werden im Wesentlichen die Unterschiede erläutert.

Bei der ersten Kraftübertragungseinrichtung 46" der Fig. 4 ist das Schaltglied 66 über einen Schaltgliedstift 94 mit der Schaltstange 68 gekoppelt. Der Schaltgliedstift 94 durchsetzt dabei die Schaltstange 68.

Zum Einrichten des Hubes H ist ein Radialloch in der Schaltstange 68 als axiales Langloch 96 ausgebildet, derart, dass das Schaltglied 66 begrenzt in Bezug auf die Schaltstange 68 bewegbar ist. Mit anderen Worten kann ein Anschlag 90 an einer Innenwand des Langloches 96 ausgebildet sein.

Die Feder 86 ist zwischen einer Schaltstangenschulter 88 und dem Schaltglied 66 angeordnet.

Der Schaltstangenmitnehmer 70 ist starr mit der Schaltstange 68 verbunden und das Schaltglied 66 liegt dabei an dem Schaltstangenmitnehmer 70 an. In diesem Fall kann der Anschlag für das Schaltglied 66 auch durch den Schaltstangenmitnehmer 70 gebildet sein, wie es in Fig. 4 bei 90' angedeutet ist.

In den folgenden Figuren 5 bis 8 werden weitere Ausführungsformen von ersten Kraftübertragungseinrichtungen 46 dargestellt, die hinsichtlich Aufbau und Funktionsweise generell der ersten Kraftübertragungseinrichtung 46" der Fig. 4 entsprechen. Gleiche Elemente sind daher durch gleiche Bezugszeichen gekennzeichnet. Im Folgenden werden im Wesentlichen die Unterschiede erläutert.

Bei der ersten Kraftübertragungseinrichtung 46'" der Fig. 5 sind die Feder 86 und der Schaltstangenmitnehmer 70 auf einer axialen Seite des Schaltgliedes 66 angeordnet, so dass sich eine platzsparende Anordnung ergibt. Dabei weist das Schaltglied 66 eine Schaltgliedschulter 98 auf, an der sich die Feder 86 abstützt. Auf der anderen axialen Seite stützt sich die Feder 86 an dem Schaltstangenmitnehmer 70 ab.

Bei der ersten Kraftübertragungseinrichtung 46^{IV} der Fig. 6 ist gegenüber der Kraftübertragungseinrichtung 46" der Fig. 4 vorgesehen, dass das Schaltglied 66 einen axialen Hohlraum aufweist, in dem die Feder 86 angeordnet ist, um diese vor Fremdeinwirkungen zu schützen.

Bei der ersten Kraftübertragungseinrichtung 46^{V} der Fig. 7 weist das Schaltglied 66 einen Federführungsabschnitt auf, um den die Feder 86 herum angeordnet ist, so dass sich die Feder 86 nicht an einem axialen Ende des Schaltgliedes 66 abstützt, wie es in Fig. 4 gezeigt ist, sondern an einer Schulter des Schaltgliedes 66, die im Bereich der Verbindung des Schaltgliedes mit dem Schaltgliedstift ausgebildet sein kann.

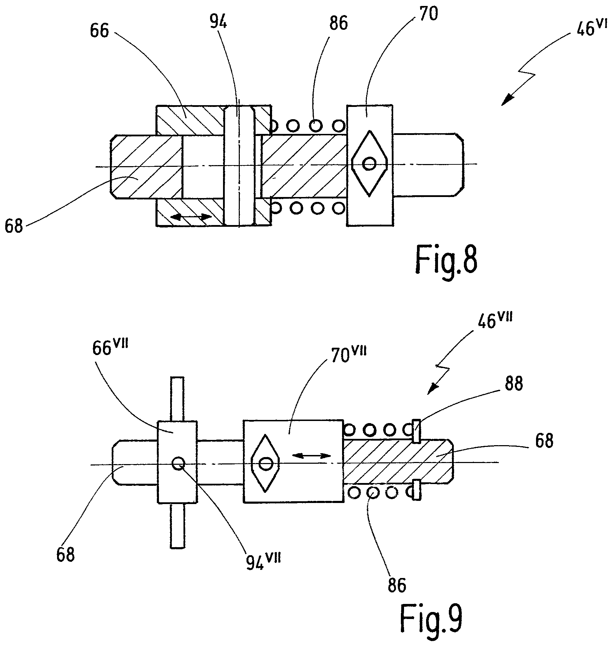

Bei der ersten Kraftübertragungseinrichtung 46^{VI}, die in Fig. 8 gezeigt ist, sind, ähnlich wie bei der Ausführungsform der Fig. 5, die Feder 86 und der Schaltstangenmitnehmer 70 auf einer axialen Seite des Schaltgliedes 66 angeordnet. In diesem Fall ist die Feder 86 jedoch zwischen einem axialen Ende des Schaltgliedes 66 und dem Schaltstangenmitnehmer 70 eingespannt.

Fig. 9 zeigt eine Abwandlung der oben beschriebenen ersten Kraftübertragungseinrichtungen in Form einer ersten Kraftübertragungseinrichtung 46^{VII}.

Bei der ersten Kraftübertragungseinrichtung 46^{VII} ist das Schaltglied 66^{VII} starr mit der Schaltstange 68 verbunden, und zwar über einen Schaltgliedstift 94^{VII}, der eine konzentrisch hierzu in der Schaltstange 68 vorgesehene Bohrung durchsetzt.

Bei der Ausführungsform der Fig. 9 ist der Schaltstangenmitnehmer 70^{VII} in axialer Richtung begrenzt verschieblich an der Schaltstange 68 gelagert, und die Feder 86 ist zwischen einer Schaltstangenschulter 88 und dem Schaltstangenmitnehmer 70^{VII} eingespannt.

## Patentansprüche

1. Schaltungsanordnung (30) für ein Kraftfahrzeuggetriebe (16), mit:
- einer Schaltkupplungsanordnung (34), mittels der eine Gangstufe des Kraftfahrzeuggetriebes (16) ein- und auslegbar ist,
- einer elektrisch betätigbaren Aktuatoranordnung (40), die über eine erste Kraftübertragungseinrichtung (46) mit der Schaltkupplungsanordnung (34) gekoppelt ist,
- einer Parksperrenanordnung (50), die über eine zweite Kraftübertragungseinrichtung (56) mit der Aktuatoranordnung (40) gekoppelt ist, wobei die Aktuatoranordnung (40) in eine Parksperrenposition (P) versetzbar ist, in der die Parksperrenanordnung (50) betätigt ist, wobei die Aktuatoranordnung (40) dazu ausgebildet ist, auf dem Weg in die Parksperrenposition (P) und/oder in der Parksperrenposition (P) über die erste Kraftübertragungseinrichtung (46) die Gangstufe einzulegen, **dadurch gekennzeichnet, dass** die erste Kraftübertragungseinrichtung (46) eine Entkopplungseinrichtung (58) aufweist, die dazu ausgebildet ist, die Aktuatoranordnung (40) in die Parksperrenposition (P) zu versetzen, auch wenn die Schaltkupplungsanordnung (34) blockiert und das Einlegen einer Gangstufe nicht möglich ist, wobei die Entkoppelungseinrichtung (58) so ausgebildet ist, dass sie durch eine zweite Kraft (F₂) aktivierbar ist, die eine normalerweise zum Einlegen einer Gangstufe oder zum Einlegen der Parksperrenanordnung (50) erforderliche erste Kraft (F₁) überschreitet, wobei ein elektrischer Strom (I) an der elektrisch betätigbaren Aktuatoranordnung (40) erhöht wird, und zwar auf einen Wert (i₂), der der zweiten Kraft (F₂) entspricht, falls eine Blockade der Schaltkupplungsanordnung detektiert wird.

2. Schaltungsanordnung nach Anspruch 1, **dadurch gekennzeichnet, dass** die Entkopplungseinrichtung (58) einen mechanischen Energiespeicher (86) aufweist, der dazu ausgebildet ist, eine von der Aktuatoranordnung (40) aufgebrachte Kraft zum Einlegen der Gangstufe zu speichern, wenn die Schaltkupplungsanordnung (34) blockiert und ein Einlegen der Gangstufe nicht möglich ist.

3. Schaltungsanordnung nach Anspruch 1 oder 2, **dadurch gekennzeichnet, dass** die Entkopplungseinrichtung (58) eine Feder (86) aufweist.

4. Schaltungsanordnung nach Anspruch 2 oder 3, **dadurch gekennzeichnet, dass** der Energiespeicher (86) eine Vorspannkraft zwischen der Aktuatoranordnung (40) und der Schaltkupplungsanordnung (34) einrichtet, die größer ist als eine zum Einlegen der Gangstufe aufzubringende mittlere Schaltkraft.

5. Schaltungsanordnung nach einem der Ansprüche 1 - 4, **dadurch gekennzeichnet, dass** die Entkopplungseinrichtung (58) zwischen einem Aktuatorglied (44) der Aktuatoranordnung (40) und einem Schaltglied (66) der Schaltkupplungsanordnung (34) angeordnet ist.

6. Schaltungsanordnung nach Anspruch 5, **dadurch gekennzeichnet, dass** die Entkopplungseinrichtung (58) zwischen einer formschlüssig mit dem Aktuatorglied (44) verbundenen Schaltstange (68) und dem Schaltglied (66) angeordnet ist.

7. Schaltungsanordnung nach einem der Ansprüche 1 - 4, **dadurch gekennzeichnet, dass** die Schaltkupplungsanordnung (34) ein Schaltglied (66) und eine Schaltstange (68) aufweist, wobei das Schaltglied (66) an der Schaltstange (68) begrenzt verschieblich gelagert ist.

8. Schaltungsanordnung nach Anspruch 7, **dadurch gekennzeichnet, dass** das Schaltglied (66) über die Feder (86) mit der Schaltstange (68) gekoppelt ist.

9. Schaltungsanordnung nach einem der Ansprüche 1 - 8, **dadurch gekennzeichnet, dass** die Aktuatoranordnung (40) eine Schaltwalze (78) aufweist.

10. Schaltungsanordnung nach Anspruch 9, **dadurch gekennzeichnet, dass** ein Mitnehmerelement (70) der ersten Kraftübertragungseinrichtung (46) in eine Schaltkontur (82) der Schaltwalze (78) eingreift und/oder die Parksperrenanordnung (50) über ein Zwanglaufgetriebe (76; 84) mit der Schaltwalze (78) gekoppelt ist.

11. Verfahren zum Betätigen einer Parksperrenanordnung (50) mittels einer elektrisch betätigbaren Aktuatoranordnung (40), insbesondere mittels einer Schaltungsanordnung (30) nach einem der Ansprüche 1 - 10, wobei die Aktuatoranordnung (40) über eine erste Kraftübertragungseinrichtung (46) mit einer Schaltkupplungsanordnung (34) eines Kraftfahrzeuggetriebes (16), mittels der eine Gangstufe des Kraftfahrzeuggetriebes (16) ein- und auslegbar ist, gekoppelt ist, wobei die Aktuatoranordnung (40) über eine zweite Kraftübertragungseinrichtung (56) mit der Parksperrenanordnung (50) gekoppelt ist und wobei die erste Kraftübertragungseinrichtung (46) eine Entkopplungseinrichtung (58) aufweist, und wobei die Entkoppelungseinrichtung (58) durch eine zweite Kraft (F₂) aktivierbar ist, die eine normalerweise zum Einlegen der Gangstufe oder zum Einlegen der Parksperrenanordnung (50) erforderliche erste Kraft (F₁) überschreitet, mit den Schritten:
- Ansteuern der Aktuatoranordnung (40) so, dass eine erste Kraft (F₁) zum Bewegen der Parksperrenanordnung (50) in eine Parksperrenposition bereitgestellt wird;
- Erfassen, ob auf dem Weg in eine Parksperrenposition eine Blockade der Schaltkupplung auftritt, in welcher das Einlegen der Gangstufe nicht möglich ist;
- Ansteuern der elektrisch betätigbaren Aktuatoranordnung (40) so, dass eine zweite Kraft (F) bereitgestellt wird, die größer ist als die erste Kraft (F) und mittels der die Kraftübertragungseinrichtung (58) der ersten Entkopplungseinrichtung (46) aktiviert wird, falls eine Blockade der Schaltkupplungsanordnung (34) aufgetreten ist, wobei ein elektrischer Strom (I) an der elektrisch betätigbaren Aktuatoranordnung (40) erhöht wird, und zwar auf einen Wert (i), der der zweiten Kraft (F) entspricht.

## Claims

1. Circuit assembly (30) for a motor vehicle transmission (16), with:
- a shifting clutch assembly (34), by means of which a gear stage of the motor vehicle transmission (16) can be engaged and disengaged,
- an electrically actuable actuator assembly (40) which is coupled via a first force transmission device (46) to the shifting clutch assembly (34),
- a parking lock assembly (50) which is coupled via a second force transmission device (56) to the actuator assembly (40), it being possible for the actuator assembly (40) to be set into a parking lock position (P), in which the parking lock assembly (50) can be actuated, the actuator assembly (40) being configured to engage the gear stage via the first force transmission device (46) on the way into the parking lock position (P) and/or in the parking lock position (P), **characterized in that** the first force transmission device (46) has a decoupling device (58) which is configured to set the actuator assembly (40) into the parking lock position (P) even if the shifting clutch assembly (34) locks and the engagement of a gear stage is not possible, the decoupling device (58) being configured in such a way that it can be activated by way of a second force (F₂) which exceeds a first force (F₁) which is normally required to engage a gear stage or to engage the parking lock assembly (50), an electric current (I) at the electrically actuable actuator assembly (40) being increased, to be precise to a value (i₂) which corresponds to the second force (F₂) if locking of the shifting clutch assembly is detected.

2. Circuit assembly according to Claim 1, **characterized in that** the decoupling device (58) has a mechanical energy store (86) which is configured to store a force which is applied by the actuator assembly (40) for engaging the gear stage if the shifting clutch assembly (34) locks and an engagement of the gear stage is not possible.

3. Circuit assembly according to Claim 1 or 2, **characterized in that** the decoupling device (58) has a spring (86).

4. Circuit assembly according to Claim 2 or 3, **characterized in that** the energy store (86) sets up a prestressing force between the actuator assembly (40) and the shifting clutch assembly (34), which prestressing force is greater than a mean shifting force which is to be applied for engaging the gear stage.

5. Circuit assembly according to one of Claims 1 to 4, **characterized in that** the decoupling device (58) is arranged between an actuator member (44) of the actuator assembly (40) and a shifting member (66) of the shifting clutch assembly (34).

6. Circuit assembly according to Claim 5, **characterized in that** the decoupling device (58) is arranged between a selector rod (68), which is connected to the actuator member (44) in a positively locking manner, and the shifting member (66).

7. Circuit assembly according to one of Claims 1 to 4, **characterized in that** the shifting clutch assembly (34) has a shifting member (66) and a selector rod (68), the shifting member (66) being mounted on the selector rod (68) such that it can be displaced to a limited extent.

8. Circuit assembly according to Claim 7, **characterized in that** the shifting member (66) is coupled via the spring (86) to the selector rod (68).

9. Circuit assembly according to one of Claims 1 to 8, **characterized in that** the actuator assembly (40) has a shifting drum (78).

10. Circuit assembly according to Claim 9, **characterized in that** a driver element (70) of the first force transmission device (46) engages into a shifting contour (82) of the shifting drum (78) and/or the parking lock assembly (50) is coupled via a constrained motion mechanism (76; 84) to the shifting drum (78).

11. Method for actuating a parking lock assembly (50) by means of an electrically actuable actuator assembly (40), in particular by means of a circuit arrangement (30) according to one of Claims 1 to 10, the actuator assembly (40) being coupled via a first force transmission device (46) to a shifting clutch assembly (34) of a motor vehicle transmission (16), by means of which shifting clutch assembly (34) a gear stage of the motor vehicle transmission (16) can be engaged and disengaged, the actuator assembly (40) being coupled via a second force transmission device (56) to the parking lock assembly (50), and the first force transmission device (46) having a decoupling device (58), and it being possible for the decoupling device (58) to be activated by way of a second force (F₂) which exceeds a first force (F₁) which is normally required to engage the gear stage or to engage the parking lock assembly (50),
with the steps:
- actuating of the actuator assembly (40) in such a way that a first force (F₁) for moving the parking lock assembly (50) into a parking lock position is provided;
- detecting whether locking of the shifting clutch occurs on the way into a parking lock position, in which the engagement of the gear stage is not possible;
- actuating of the electrically actuable actuator assembly (40) in such a way that a second force (F₂) is provided which is greater than the first force (F₁) and by means of which the decoupling device (58) of the force transmission device (46) is activated if locking of the shifting clutch assembly (34) has occurred, an electric current (I) at the electrically actuable actuator assembly (40) being increased, to be precise to a value (i₂) which corresponds to the second force (F₂).

## Revendications

1. Agencement de circuit (30) pour une transmission de véhicule automobile (16), comprenant :
- un agencement d'embrayage (34) au moyen duquel un rapport de vitesse de la transmission de véhicule automobile (16) peut être enclenché et désenclenché,
- un agencement d'actionneur à commande électrique (40) qui est accouplé par le biais d'un premier dispositif de transfert de force (46) à l'agencement d'embrayage (34),
- un agencement de frein de stationnement (50) qui est accouplé par le biais d'un deuxième dispositif de transfert de force (56) à l'agencement d'actionneur (40), l'agencement d'actionneur (40) pouvant être amené dans une position de frein de stationnement (P) dans laquelle l'agencement de frein de stationnement (50) est actionné, l'agencement d'actionneur (40) étant réalisé pour enclencher le rapport de vitesse en chemin vers la position de frein de stationnement (P) et/ou dans la position de frein de stationnement (P) par le biais du premier dispositif de transfert de force (46), **caractérisé en ce que** le premier dispositif de transfert de force (46) présente un dispositif de découplage (58) qui est réalisé pour amener l'agencement d'actionneur (40) dans la position de frein de stationnement (P) également lorsque l'agencement d'embrayage (34) est bloqué et que l'enclenchement d'un rapport de vitesse n'est pas possible, le dispositif de découplage (58) étant réalisé de telle sorte qu'il puisse être activé par une deuxième force (F₂) qui dépasse une première force (F₁) normalement nécessaire pour enclencher un rapport de vitesse ou pour enclencher l'agencement de frein de stationnement (50), un courant électrique (I) au niveau de l'agencement d'actionneur à commande électrique (40) étant augmenté et ce jusqu'à une valeur (i₂) qui correspond à la deuxième force (F₂) au cas où un blocage de l'agencement d'embrayage est détecté.

2. Agencement de circuit selon la revendication 1, **caractérisé en ce que** le dispositif de découplage (58) présente un accumulateur d'énergie mécanique (86) qui est réalisé pour accumuler une force appliquée par l'agencement d'actionneur (40) pour enclencher le rapport de vitesse lorsque l'agencement d'embrayage (34) est bloqué et qu'un enclenchement du rapport de vitesse n'est pas possible.

3. Agencement de circuit selon la revendication 1 ou 2, **caractérisé en ce que** le dispositif de découplage (58) présente un ressort (86).

4. Agencement de circuit selon la revendication 2 ou 3, **caractérisé en ce que** l'accumulateur d'énergie (86) établit une force de précontrainte entre l'agencement d'actionneur (40) et l'agencement d'embrayage (34) qui est plus grande qu'une force de commutation moyenne devant être appliquée pour l'enclenchement du rapport de vitesse.

5. Agencement de circuit selon l'une quelconque des revendications 1 à 4, **caractérisé en ce que** le dispositif de découplage (58) est disposé entre un organe d'actionneur (44) de l'agencement d'actionneur (40) et un organe de commutation (66) de l'agencement d'embrayage (34).

6. Agencement de circuit selon la revendication 5, **caractérisé en ce que** le dispositif de découplage (58) est disposé entre une tige de commutation (68), connectée par engagement par correspondance de formes à l'organe d'actionneur (44), et l'organe de commutation (66).

7. Agencement de circuit selon l'une quelconque des revendications 1 à 4, **caractérisé en ce que** l'agencement d'embrayage (34) présente un organe de commutation (66) et une tige de commutation (68), l'organe de commutation (66) étant supporté de manière déplaçable dans une mesure limitée sur la tige de commutation (68).

8. Agencement de circuit selon la revendication 7, **caractérisé en ce que** l'organe de commutation (66) est accouplé à la tige de commutation (68) par le biais du ressort (86).

9. Agencement de circuit selon l'une quelconque des revendications 1 à 8, **caractérisé en ce que** l'agencement d'actionneur (40) présente un cylindre de commande (78).

10. Agencement de circuit selon la revendication 9, **caractérisé en ce qu'**un élément d'entraînement (70) du premier dispositif de transfert de force (46) vient en prise dans un contour de commutation (82) du cylindre de commande (78) et/ou l'agencement de frein de stationnement (50) est accouplé au cylindre de commande (78) par le biais d'une transmission à mouvement forcé (76 ; 84).

11. Procédé d'actionnement d'un agencement de frein de stationnement (50) au moyen d'un agencement d'actionneur à commande électrique (40), en particulier au moyen d'un agencement de circuit (30) selon l'une quelconque des revendications 1 à 10, l'agencement d'actionneur (40) étant accouplé par le biais d'un premier dispositif de transfert de force (46) à un agencement d'embrayage (34) d'une transmission de véhicule automobile (16) au moyen duquel un rapport de vitesse de la transmission du véhicule automobile (16) peut être enclenché et désenclenché, l'agencement d'actionneur (40) étant accouplé par le biais d'un deuxième dispositif de transfert de force (56) à l'agencement de frein de stationnement (50) et le premier dispositif de transfert de force (46) présentant un dispositif de découplage (58) et le dispositif de découplage (58) pouvant être activé par une deuxième force (F₂) qui dépasse une première force (F₁) normalement nécessaire pour enclencher le rapport de vitesse ou pour enclencher l'agencement de frein de stationnement (50), comprenant les étapes suivantes :
- commande de l'agencement d'actionneur (40) de telle sorte qu'une première force (F₁) soit fournie pour déplacer l'agencement de frein de stationnement (50) dans une position de frein de stationnement ;
- détection en vue d'établir s'il se produit un blocage de l'embrayage en chemin vers une position de frein de stationnement, lors duquel l'enclenchement du rapport de vitesse n'est pas possible ;
- commande de l'agencement d'actionneur à commande électrique (40) de telle sorte qu'une deuxième force (F) soit produite, laquelle est supérieure à la première force (F) et au moyen de laquelle le dispositif de découplage (58) du premier dispositif de transfert de force (46) est activé s'il s'est produit un blocage de l'agencement d'embrayage (34), un courant électrique (I) au niveau de l'agencement d'actionneur à commande électrique (40) étant augmenté et ce à une valeur (i) qui correspond à la deuxième force (F).
